# EUROPEAN PATENT APPLICATION

(11) **EP 3 093 616 A1**
(43) Date of publication of application: **16.11.2016**
(21) Application number: 15305726.0
(22) Date of filing: 13.05.2015
(51) Int. Cl.: G01C 15/02, G05D 1/10

(54) **DEVICE AND METHOD FOR DESIGNATING CHARACTERISTIC POINTS**

(71) Applicant: Centre National d'Etudes Spatiales, 75039 Paris Cedex 01 (FR)
(72) Inventor: DUFOUR, Arnaud, 31320 AUZEVILLE-TOLOSANE (FR); DUCRET, Thibault, 31320 AUZEVILLE-TOLOSANE (FR)
(74) Representative: Nguyen Van Yen, Christian

(57) **Abstract**

The invention discloses a flying device used to designate/mark characteristic points on a surface. The flying device uses a laser beam to designate the said characteristic points and possibly mark them. Alternatively, the laser beam may be used to designate and an operator on the ground may mark them with paint or otherwise. The points to be designated may be entered in a flight plan. The flying device is precisely positioned using for instance a GNSS positioning receiver. An imaging device may be used to aid or replace the receiver.

## Description

### FIELD OF THE INVENTION

The invention allows designating, and possibly marking and measuring, characteristic points in the environment according to a predefined lay out. It has both professional uses, including public works and construction for instance, and consumer uses, such as do-it-yourself, for example.

### BACKGROUND

In the prior art of the construction domain, an architect produces plans for the construction of a building. Various construction plans are thus developed and, in particular, a layout of the building on the piece of land where the building should be erected.

This layout indicates for example the contour of the area of the piece of land to be cleared in order to create the foundations of the building to be constructed, or the axes of the trenches to be dug to bury pipes.

On the construction site, from this layout, a surveyor identifies and marks on the ground various characteristic points, which will then enable the workers to begin the construction of the building by digging the ground to permit the placement of the foundations of the building.

To carry out this step of marking characteristic points, the surveyor uses a geographic positioning station.

Optical geographic positioning stations are known for determining the geographic position of the point on the ground directly above which the station is located. This determination is carried out by using various reference beacons placed in the environment and for which the respective geographic positions are known. Through triangulation calculations, the surveyor is then capable of determining the geographic position of the point directly above which the station is located. If this point corresponds to a point of interest on the layout plan, the surveyor marks this point in order to make it a characteristic point. The surveyor uses for example paint in aerosol form to mark the point.

Also known are satellite geographic positioning stations. In a first embodiment, the station incorporates a means for determining its geographic position from signals transmitted by a constellation of location satellites (Global Navigation Satellite System or GNSS, such as GPS, Glonass, Beidou or Galileo). In a second embodiment, the positioning means of the station determine its geographic position using not only the signals transmitted by the constellation of satellites, but also the signals transmitted by a ground-based base station, the geographic position of which is known (DGPS or EGNOS systems). Once the surveyor has determined the geographic position of the point on the ground directly above which the station is located, he/she marks this point if it corresponds to a point of interest on the layout plan.

This method has a number of disadvantages.

First of all, this is a task entrusted to a surveyor, i.e. a specialist in reading plans and using positioning stations. The surveyor must move about on the construction site among machines. There is therefore a risk to his/her safety.

The surveyor must also read the plan provided to him/her, often in paper form, in order to read the information contained therein associated with the points of interest to be identified on the ground. There is therefore a risk of this plan being misinterpreted and of the characteristic point marked on the ground not actually corresponding to the point of interest on the plan. In the case where an optical positioning station is used, it is necessary to correctly place the reference beacons and to determine with precision their geographic positions. Any error in the positioning of a reference beacon will lead to an error in the position of characteristic points.

The surveyor must also move the positioning station from point to point. This is particularly tedious when an outline made up of a large number of points needs to be marked. In addition, to identify a point of interest on the construction site, the station must be placed directly above this point. If after determining the position of the current point directly above which the station is placed the surveyor realizes that this is not the point of interest to be marked, he/she is obliged to move the station and perform another position measurement in order to identify the point of interest.

Lastly, these stations cannot always be used. In the case of an optical station, a section of wall or a vehicle might obstruct the line of sight between the station and a reference beacon required for the measurement of the position of the station.

In the case of a station including a satellite positioning means, reflections of signals on surrounding buildings can lead to an incorrect determination of the position of the station. In addition, a satellite positioning means does not function in certain hemmed-in geographic areas or inside buildings.

There is therefore a need for a device and a system for assisting an operator or a non professional user to perform this marking step.

### SUMMARY OF THE INVENTION

An aim of the invention is therefore to meet this need.

To this effect, the invention discloses a flying device, such as a drone, including a UAV (Unmanned Aerial Vehicle), a RPAS (Remotely Piloted Aircraft System), or an helicopter, which is guided by precise positioning means, such as a GNSS and/or an inertial navigation system, and controlled by a flight management system in which a trajectory of points to be designated has been input. Marking can be done using a combination of an optical beam (such as a laser pointer) and human action and/or a projection of a marking product. Measuring can be done using a combination of optical cameras, marking features and means for image processing and feature recognition.

More precisely, the invention discloses a flying device configured to designate a characteristic point on a surface, said flying device comprising a flight management module, configured to execute a flight plan comprising a stop point in line of sight of a characteristic point; a position control module, configured to control a position of the flying device within a predefined distance of the stop point; and a beam generation module, configured to generate a beam to create a symbol designating the characteristic point at an intersection of the beam and the surface.

Advantageously, the flying device of the invention is a drone with a single propeller.

Advantageously, the flying device of the invention is a drone with a plurality of propellers.

Advantageously, the flying device of the invention is a drone with at least three propellers.

Advantageously, the flying device of the invention is configured to designate a plurality of characteristic points.

Advantageously, the flight plan is defined as a function of forecast air speed.

Advantageously, the flight plan is amended as a function of actual air speed.

Advantageously, the position control module comprises a position sensing module.

Advantageously, the position sensing module comprises a GNSS receiver.

Advantageously, the GNSS receiver delivers a position using atmospheric corrections calculated using un-differenced code and phase measurements of signals received by the GNSS receiver.

Advantageously, the GNSS receiver delivers a position using atmospheric corrections calculated using a combination of code and phase measurements of signals received by a number of other contributing GNSS receivers located in a same geographic area as the GNSS receiver.

Advantageously, the position sensing module comprises an inertial sensor.

Advantageously, the inertial sensor is calibrated in the area of the characteristic points before starting execution of the flight plan.

Advantageously, the beam generation module comprises a laser beam generator.

Advantageously, the laser beam generator is mounted on a gimbal with at least two degrees of freedom.

Advantageously, the laser beam generator generates at least two types of laser beams, a first type of laser beam when the flying device is not stable and a second type of laser beam when the flying device is stable.

Advantageously, the laser beam generator is further configured to print a mark on the surface at the characteristic point.

Advantageously, the beam generation module comprises an aerosol paint projector.

Advantageously, the flying device of the invention further comprises a camera and an alignment module configured to align a reference feature on the surface with a characteristic point.

Advantageously, the camera and the alignment module are further configured to generate a new characteristic point from a reference feature on the surface.

The invention also discloses a method of creating in a computer a flight plan for designating a characteristic point on a surface with a flying device, said method comprising: entering the characteristic point in the computer; causing the computer to calculate, for each characteristic point, a first stop point of the flying device, said first stop point being in line of sight of the characteristic point and within a distance of the flying device where a beam generation module on board the flying device will be operable to create a symbol designating the characteristic point at an intersection of the beam and the surface; causing the computer to calculate a flight plan connecting second stop points, each second stop point being equal to or in a vicinity of a first stop point, the second stop points still fulfilling the same constraints as the first stop points, the flight plan being optimal and valid versus a set of predefined criteria; Transferring the flight plan to a flight management module of the flying device.

The invention also discloses a method of designating a characteristic point on a surface with a flying device, said method comprising: executing, on a flight management computer of the flying device, a flight plan comprising a stop point in line of sight of the characteristic point; controlling, with position control hardware and software resources, a position of the flying device within a predefined distance of the stop point; and generating, from a beam generating platform on board the flying device, a beam to create a symbol designating the characteristic point at an intersection of the beam and the surface.

Therefore, the invention considerably reduces the risk of errors. It also greatly reduces the cost of operation. In some embodiments, the invention can be implemented without any human intervention. In any case, the invention allows marking to be performed by less qualified personnel since, in some embodiments, the only act to be performed is to apply a mark at the points designated optically. The mark is preferably in the visible or the infrared spectrum.

### BRIEF DESCRIPTION OF THE DRAWINGS

The invention and its advantages will be better understood upon reading the following detailed description of a particular embodiment, given purely by way of non-limiting example, this description being made with reference to the accompanying drawings in which:
- Figure 1 is a schematic representation of a system of the invention, according to some of its embodiments;
- Figure 2 is a functional representation of a drone of Figure 1;
- Figure 3 is a representation in block form of the method of use of the system of Figure 1.

### DETAILED DESCRIPTION

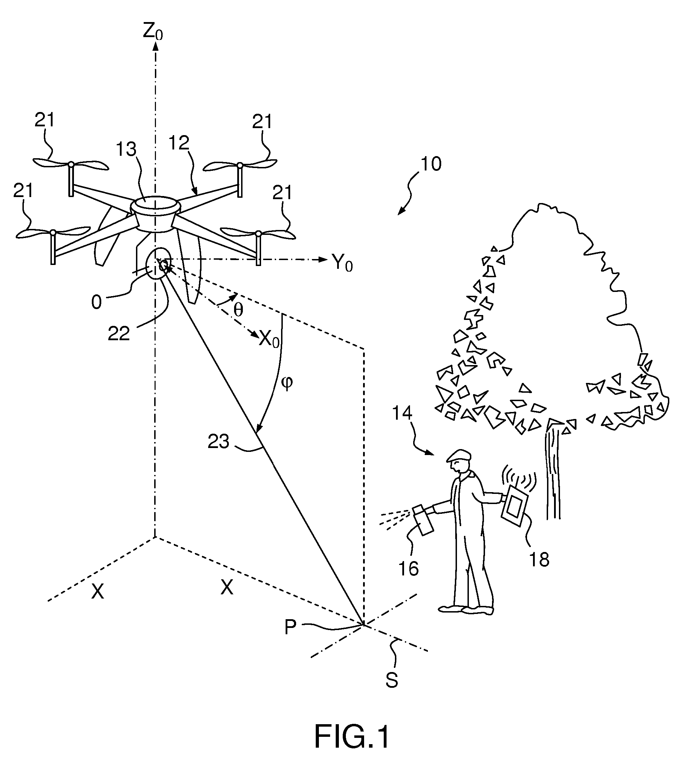

As represented on figure 1, the system 10 includes a flying device 12, depicted in this embodiment as a drone, carrying a marking means 22. The marking means may be, for example, a laser beam which lights up a point P on a surface S (possibly the ground or a floor) which is a characteristic point corresponding to a point of interest on a plan. The drone 12 follows a flight plan allowing it to successively light up all the characteristic points associated with the layout plan. In an embodiment, each time a point on the ground is lit, an operator 14 marks this point for example by means of aerosol paint 16.

In another embodiment, the drone carries a reservoir containing the aerosol paint and directly marks the point when it has reached a stable position. In this embodiment, the flying altitude of the flying device must be low enough so that the aerosol beam is not too much dispersed when reaching the ground or surface to be marked. As a variant, the aerosol reservoir may be on the ground, connected to the drone by a flexible pipe. In a number of applications, this can be advantageous when the surface to be marked is limited and the number of characteristic points may be high.

Also, in a variant, lines connecting the characteristic points may be drawn, as is needed in a number of applications. In a number of applications, if the characteristic points are on a surface which is painted or covered with a material which can be photosensitive (e.g. resist) or which can be melted by a laser beam, the aerosol paint can be avoided, and a laser beam of a higher power will be used directly as a permanent marking device in lieu of the aerosol.

In the present patent application, a "drone" is understood to mean a pilotless aircraft, this aircraft being piloted either automatically or remotely by an operator equipped with a remote control. A drone is maintained at a distance from the surface to be marked. It has no direct physical contact with the surface. A flying drone is understood as a contactless device. A drone can be a powered dirigible, for instance a balloon with propellers. It can also be a tethered manoeuvrable balloon.

In another embodiment, the flying device may be a small helicopter with a pilot. The pilot may trigger the aerosol paint as a substitute to an on-ground operator.

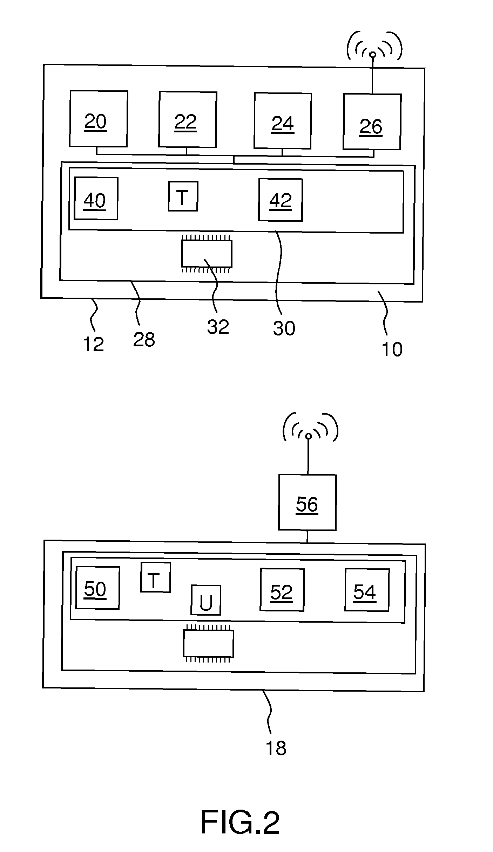

With reference to Figure 2, the drone includes a propulsion means 20. Preferably, the propulsion means incorporates four propellers 21, motors associated with each propeller and a power source, such as for example an electric battery. A drone including a plurality of propellers is advantageously used, since it exhibits better stability in flight, notably in stationary flight, which can be of benefit regarding the precision of the marked point on the ground or target surface.

The drone carries a marking means 22.

In some embodiments, the marking/designating means includes a laser device. Such a device has a reduced mass such that the total weight of the drone remains low. This is advantageous because it both increases the endurance of the drone, but it also simplifies compliance with the regulations which define categories notably according to the weight of the drone. The advantage of commercially available laser pointers is their compliance with laser safety rules. Compliance may change slightly from country to country. CE marking is used in Europe. FDA rules apply in the US.

The laser device is intended to generate a laser beam 23. Advantageously, the laser draws on the ground a symbol S, such as a cross for example, which conveys some information to the operator 14. For example, while the drone is not stabilized, the symbol can be flashing. It becomes continuous when the drone is stabilized and when the trace of the laser beam on the ground coincides, within a predefined confidence level, with the characteristic point which is to be marked. Alternatively, two different colours can be used. Beams with different aspects can also be used. Laser wavelength can be chosen and beams of different wavelengths can be combined. The most common used ones are red (635 nm), green (520 nm) and blue (445 nm). Some laser devices can be featured with different head modules such as a laser head straight line module or crosshair. Multiple variations are possible.

The operator 14 can then mark the corresponding point P. The symbol can also be chosen according to the nature of an item of information associated with the characteristic point.

Alternatively, the laser can be the permanent marking device, or the aerosol paint can be projected directly from the drone.

In another embodiment, a photosensitive paint can be sprayed in the area to be marked. The optical reaction between the optical beam from the laser device or equivalent and the photosensitive paint allows direct marking. This is especially interesting for indoor marking where precision is critical.

The luminosity of the laser beam can be adjusted according to sunlight conditions so as to allow the operator to correctly see the symbol on the ground, even in broad daylight. For example a 5mW green laser beam itself can be seen in open air condition by the naked eye at night (http://en.wikipedia.org/wiki/Laser pointer). The laser spot is indeed much brighter than the beam itself.

As a variant, the marking means includes a projector, intended to project an image on the ground. The ground hence forms a projection surface for the image.

The laser device is movably fitted on a platform 13 of the drone 12. The platform 13 may be placed at the most appropriate location. For example, under the drone, above it or laterally.

In a variant, several designating and/or marking means can be fitted.

In another variant, designating and/or marking means can be fitted to or with cameras

A reference frame X0, Y0, ZO is associated with the platform, such that when the drone 12 is placed on a horizontal surface, the axis ZO coincides with a vertical, and the plane X0Y0 with a horizontal plane. To simplify the present description, the reference frame X0, Y0, ZO is attached to the optical centre 0 of the marking device.

The laser device is for example carried by a support frame. The support frame is fixed, via a top end, to the platform 13 of the drone by a hinged joint, allowing the support frame to turn 360° about the axis Z0.

The housing of the laser device may be fixed to the bottom end of the support frame via a hinged joint, allowing the laser device to turn between -90° and +90° about an axis perpendicular to the axis Z0.

The marking means 22 may incorporate means for rotationally actuating the laser device so as to control the pointing direction of the laser.

The drone 12 includes a positioning means 24. In a preferred embodiment providing for use on an outdoor construction site, the positioning means is a GNSS for determining, in real time, the position of the point 0 and the orientation of the reference frame X0, Y0, ZO of the drone with respect to an absolute geographical reference system X, Y, Z.

The GNSS positioning precision is improved by positioning means 24 taking into account disturbances affecting the propagation of radio-navigation signals transmitted by the satellites, which disturbances are induced by the ionosphere.

For example, the positioning means 24 is a precise, absolute and drift-free satellite positioning means described in PCT application published under n°WO 2008/125458. This positioning means implements an algorithm referred to as "PPP with resolution of non-differenced integer ambiguities", where the abbreviation "PPP" stands for "Precise Point Positioning".

More specifically, each satellite of the constellation of satellites broadcasts a first radio-navigation signal over a first frequency and a second radio-navigation signal over a second frequency that is different from the first.

A ground-based reference station belonging to a network of stations processes the radio-navigation signals coming from one of the visible satellites, so as to determine corrections, such as an internal delay of the satellite and an integer value of the wide-lane ambiguity for the reference station. This processing provides:
- the reception of first and second radio-navigation signals;
- a non-differenced code measurement and a non-differenced phase measurement;
- the calculation of a raw value of the wide-lane phase ambiguity;
- the fixing of an internal satellite delay together with the integer value of the wide-lane phase ambiguity for the reference station.

The corrections are then transmitted to the drone GNSS receiver.

The GNSS receiver then carries out the following processing:
- receive the first and second radio-navigation signals of a visible satellite of the constellation of satellites;
- for each of the first and second received signals, execute a non-differenced code measurement and a non-differenced phase measurement;
- calculate a raw value of the wide-lane phase ambiguity from the non-differenced code measurements and from the non-differenced phase measurements;
- acquire an internal satellite delay and determine an integer value of the wide-lane phase ambiguity based on the said raw value and the said internal satellite delay.

In addition to the internal satellite delay, other corrections relating to the satellites visible by the receiver can be calculated by the reference stations, which corrections are transmitted to the GNSS receiver and used by the latter for an accurate - of the order of a centimetre - and absolute determination of its instantaneous position.

In this embodiment, the positioning means is a dual-frequency module in order to be able to receive the first and second radio-navigation signals.

Alternatively, or in combination, atmospheric corrections can be obtained as a result of a collaborative correction process such as the one disclosed by French patent application filed with filing n°FR14/56862. According to this process, the receiver can communicate with a server comprising hardware and software resources configured for:
- Determining a list of contributing receivers located in a geographic area where the receiver is located;
- Acquiring at a predetermined frequency, timed sequences of data transmitted by the contributing receivers in the list, said timed sequences of data comprising:
   ∘ Code and phase of a channel of each contributing receiver; and/or
   ∘ A data computed thereof;
- Calculating a timed sequence of atmospheric errors/corrections applicable in the geographic area;
- Providing the timed sequence of atmospheric errors/corrections to the receiver.

In such an embodiment, the receiver does not need to be a multi-frequency receiver. Decimetre precision will be possible to achieve, which may notably be enough for consumer applications, for instance drawing a lay-out for a garden.

As a variant, if the system 10 must be used indoors, the drone also carries other positioning means 24, such as an altimeter and an inertial unit (including accelerometers, compass, gyroscopes and magnetometers), for determining the instantaneous position and orientation of the drone relative to a position and orientation of calibration of the altimeter and of the inertial unit. This calibration can for example be performed before the start of the flight, the drone 12 being placed at a determined location of a take-off area.

In another variant, the drone may use an on-board optical camera as a positioning means 24. Landmark or reference points can be used to triangulate the drone position. A time of flight (ToF) camera can also be used. ToF cameras resolve distance based on the known speed of light, measuring the time-of-flight of a light signal between the camera and the subject for each point of scanned area. Also, one or more LIDAR systems can be used. LIDAR are point-by-point laser scanners as opposed to ToF Cameras which capture an entire scene.

In another variant ToF Cameras or LIDAR systems can be placed on the ground in order to position the flying drone with absolute distance measurements.

The designating/marking means 22 can be calibrated. A calibrating process may be run. For example three reference features such as points, lines, edges or landmarks can be used. Rotating and actuating the designating/marking means 22 is conduced until mark locations coincide with the reference features within a predefined tolerance. In a variant the features are optical sensors or cameras sensitive to the optical beam of the designating means 22. In another variant, the drone on-board optical or ToF cameras can be used to align the reference and designating/marking features.

In another variant the calibration process can be used to add and measure features. In a first step the drone is referenced. The positioning means 24 position the drone in an absolute geographical reference system or relative one. The relative positioning is often sufficient for indoor operations. Referencing the optical sensors or cameras can be done with reference features. In a second step images or measurements can be acquired in the reference system. Image processing of the images or measurements can extract coordinates or measurements. This information can be added to the flight plan.

The drone includes a radio wave transmission/reception module 26 for establishing a wireless communication with a ground-based remote computer 18 which itself is equipped with a suitable transmission/reception module 56. The setting-up of a link provides for the exchange of data from the drone to the computer and from the computer to the drone. In some embodiments, the communication link can be wired.

The drone 12 includes an on-board computer 28 which includes an input/output interface for the exchange of information with the propulsion, marking, positioning and transmission/reception modules.

The computer 28 includes a memory 30, in which data is stored, as well as the instructions of various application software modules.

The computer 28 includes a microprocessor 32 to execute the instructions of the application modules stored in memory.

In particular, the memory of the computer stores a flight plan T. The flight plan mentions a succession of stopping points, which belong to a trajectory that the drone will follow over the course of its flight. The drone flies from one stopping point to the next, and performs a stationary flight at each stopping point - the time to allow the marking module to point the laser beam to a characteristic point on the ground, and possibly the aerosol paint to be gunned to the target point.

The flight plan T also includes, for each stopping point, a characteristic point on the ground, corresponding to the point on the ground that the marking device must light up when the drone is stabilized at the corresponding stopping point. Once the drone is stabilized around a stopping point, the marking device is controlled in θ and, possibly in ϕ, so that the laser beam points to the characteristic point associated with this stopping point in the flight plan T.

Control of the drone in site, ϕ, may be limited to ascertain that the drone remains vertically above the point to be marked (ϕ = 90°). When the terrain is flat or its relief is known with a precision/confidence interval which is consistent with the precision/confidence interval required by the application, it is possible to control the drone with a site angle of a definite value different from 90°, for instance 60°, or any other value, but preferably not lower than 45°. Such an embodiment may be advantageous when it is necessary to designate/mark loci which are located under or close to an obstacle as illustrated on figure 1. Also, it may be advantageous to control a drone in a fixed position at a centre of an area to be marked and have the laser beam rotate in azimuth with a semi-fixed site angle.

The most significant parameters which will impact the precision of a designation of loci on a surface will be: i) the precision of the positioning hardware and software used: ii) the precision of the map used to prepare the mission and calculate the flight plan; iii) the precision of the control mechanism of the laser beam and/or the imaging system. When positioning is achieved with a GNSS receiver, a positioning precision/confidence interval can be calculated statically (i.e. based on the hardware and software configuration of the receiver) or dynamically (i.e. based in addition on the positions of the satellites of the GNSS constellations available at the sites on the flight plan, conditions of reception of the signals at these sites and corrections which may be available locally) using methods disclosed by French patent application filed under n°FR14/56862 assigned to the same applicant as the instant application. Precision of the map is normally given by the editor. Specific attention and weight is to be given to the precision in elevation, if a control in site to a value different from 90° is to be used. Precision of the laser beam and/or the imaging system is given by the manufacturer.

In a variant, an on-board optical or ToF camera can be used to align reference features or scenes on the surface with the map of the area to be marked. When sufficient matching is obtained, the marking device 22 can be activated.

In another variant, an on-board optical or ToF camera can be used to acquire characteristic points from reference features or scenes and add them to the initial flight plan. Starting from a very simple initial flight plan with at least one characteristic point, the flying device can generate a symbol designating a characteristic point as described previously. The on-board optical or ToF camera is then used to acquire a reference feature from the surface. The reference feature is added to the map of the area to be marked as a characteristic point. This process can be repeated to acquire more points. Distance measurements, alignment check, surface measurements and other calculations can be performed with this approach. Also, the designating device 22 can be activated to validate that sufficient matching is obtained between an acquired characteristic point and its corresponding reference feature on the surface.

In another variant, obstacle or people detection can be incorporated in the flight control system. For example, if a person or a moving object such as machinery is detected, the designating/marking device 22 will not be turned on and the drone may change its course to insure safety both on the ground and in the air. Detection can rely on on-board optical or ToF cameras with pattern and movement detections or other means such as an ultrasonic distance sensor.

The computer 28 also includes a flight control module 40 to control the propulsion means 20 of the drone 12. In particular, the flight control module 40 uses the flight plan T in such a way that the drone follows the trajectory required and passes from stopping point to stopping point. More specifically, the flight control module 40 acquires the instantaneous position of the drone as delivered by the positioning module 24. It calculates a difference with respect to the flight plan trajectory and controls the propulsion means to reduce this difference, to maintain the position of the flying device within a predefined precision. This is in particular the case when the drone must stabilize its flight at a stopping point. The flight control module considers that the drone is actually at the stopping point of the flight plan when the difference between the current position of the drone and the stopping point is less than the predefined precision.

The computer 28 includes a designating/marking module 42 to control the designating/marking device 22. It is intended to switch it on or switch it off, to orient it in θ and ϕ in order to point, according to the flight plan information, the laser beam towards a characteristic point on the ground, to select the symbol to be displayed, to adjust the luminosity, etc.

The ground-based computer 18 includes, for example, an application software module 50 for developing a flight plan from a layout plan U loaded in the memory of the computer. This application software module 50 for developing a flight plan can also be located on a remote server.

In some embodiments, the method for developing the flight plan which is implemented when this module 50 runs is the following:

The layout plan U loaded into memory is for example displayed on the screen of the computer.

The operator is invited, by means of a suitable pointer, to select a plurality of points of interest as characteristic points to be marked.

The development module 50 then creates a flight plan T.

First, the characteristic points selected by the operator are placed in a flight plan T.

Then, for each characteristic point, the development module determines a stopping point of the drone from which the marking means will be able to light up the considered characteristic point.

The development module then calculates a trajectory passing through these stopping points. An interpolation method can be used. The trajectory can be determined under constraints, for example minimizing the total distance to be travelled between take-off and landing of the drone.

In an embodiment, the stop points will be defined as a function of the designating/marking means and of the terrain. For example, if marking is performed by projecting an aerosol paint from the drone, the altitude will have to be minimal. But if there are, for example, some power lines above the terrain, it will be necessary to include them in the constraints defining the flight plan. The definition of the flight plan can be aided by the use of a 3D map of the terrain which will include 3D coordinates of the obstacles on the terrain. As can be seen on figure 1, a tree is represented as an obstacle. The tree and its foliage can be modelled in 3D as a no-flight zone. For example a sphere, larger than the tree or a more accurate 3D polygon contour defines the zone. Designating and/or pmarking under the tree requires the drone to fly outside the no-flight zone and control in θ and ϕ the drone attitude and/or the designating/marking device to reach the desired marking area under the tree foliage. These actions can be calculated and incorporated in the flight plan. It can also be used during the flight plan if an obstacle is detected. control in θ and ϕ can be selected from an good position, a safe distance from the obstacle, to reach the marking area.

Also, the flight plan may take into account meteorological conditions, for example direction and strength of the wind, so that the coordinates of the stop points relative to the characteristic points will be defined as a function of these conditions. In a variant, high turbulence areas are avoided as much as possible by adding a score to the no-flight zone criteria. In another variant, calm areas can also be favoured. With such variants control in θ and ϕ can be determined appropriately. For example this allows to cast a beam with the marking device 22 through an opening while the drone is calm area inside a building.

Then, each stop point is corrected so as to be repositioned exactly on the calculated trajectory.

The definitive flight plan T is obtained.

The computer 18 includes an application software module 52 for verifying that the flight plan T, which was developed as indicated above, is compatible with the characteristics of the drone 12 used.

For example, the module 52 verifies that the trajectory of the flight plan is consistent with the endurance of the drone 12, that the trajectory does not pass through areas which are not covered by the satellite positioning system, etc.

Once the flight plan is verified, it is transmitted to the computer 28 of the drone and is stored in the memory 30 of the latter, so that it can be called by the flight control module 40 and the designating/marking module 42.

The computer 18 also includes a flight authorization module 54 for verifying a plurality of flight parameters before authorizing the drone 12 to carry out the mission associated with the flight plan T. On the drone side, there is also a flight authorization module for verifying its integrity related to the authorized flight plan. This feature can be combined with people or object detection in order to detect any breach in a safe zone around the flight plan.

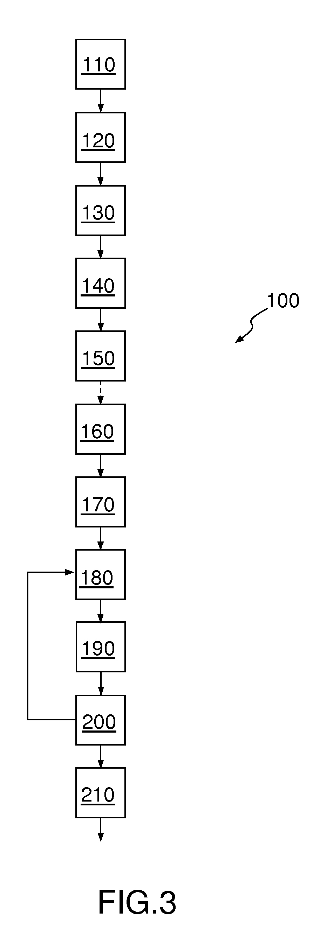

With reference to Figure 3, the method 100 for using the system 10 that has just been described will be presented in the context of the construction of a swimming pool in a garden.

During a first phase prior to the use of the drone, the flight plan is developed. In a variant, flight plans can be added or modified after the drone is off the ground.

At a first step 110, the operator loads into the computer 18 a template of the pool to be constructed previously obtained from the manufacturer/distributor of the swimming pool.

In parallel, the operator 14 loads a 3D digital file representing the piece of land on which the swimming pool will be constructed. By means of a suitable interface, the operator 14 virtually places the template on the piece of land. Once the placing of the swimming pool is validated, the layout plan U is generated automatically.

At step 120, once the layout plan is generated, the operator 14 is invited to select various points of interest which will be marked on the ground to delimit the ground to be cleared to produce the recess for receiving the swimming pool.

The various characteristic points selected are then used for the development of the flight plan T as indicated above, when the module 50 executes step 130.

At step 140, the flight plan T is validated.

At step 150, the flight plan T is transmitted to the drone.

For the flight phase, before taking off for performing the flight corresponding to the flight plan, various flight parameters may be verified, notably the air speed (step 160 of Figure 3). Specifically, if the wind is too strong the drone will not be able to stabilize at a stopping point and the laser-beam pointing will not be precise enough. The admissible wind threshold is dependent on the precision required for the marking. For example, marking the outline of a swimming pool in a garden does not require too high a precision, so the threshold on the air speed may be raised.

Once the various flight parameters are compatible with the flight plan, a take-off authorization is transmitted by the computer 18, allowing the drone 12 to carry out the flight.

At a preliminary approach step 170, the drone 12 moves from its take-off point towards the first stopping point of the flight plan T.

Then, in an iterative manner for each stopping point of the flight plan, at step 180 the flight control module 40 controls the propulsion means 20 so as to control the instantaneous position of the drone, as measured by the satellite positioning module 24, to a set point corresponding to the stopping point.

At step 190, once the drone is stabilized at the stopping point, the flight control module 40 calls the marking module 42. The marking module 42, from the knowledge of the current stopping point and of the characteristic point to be marked, orients the laser device in such a way that the laser beam points in the direction allowing a point on the ground to be lit, corresponding to the characteristic point to be marked.

At step 200, on the ground, the operator 14 sees the symbol S displayed, first in a flashing manner, then continuously, thereby indicating that the lit point is precisely the characteristic point to be marked. The operator applies paint to mark the lit point.

In a variant, the marking step combines steps 190 and 200, using an aerosol paint projection module which is controlled in site and azimuth as the laser beam.

In another or combined variant, the operator 14 then uses a control device 19, such as for example a remote control, to indicate to the drone 12 that the point has been marked and that it can continue its mission by moving towards the next stopping point of the flight plan T. This device can also be used to return to a previous point in the event of a loss of marking. The computer 18 can also fulfil this function.

Step-by-step, the flight plan T is completed.

In an embodiment, the flight plan can be modified or be selected among several possible flight plans. As a result, coordinates of the stop points are changed during the mission, for instance to take into account a change in the atmospheric conditions, notably the wind direction and strength, so that the marking of the characteristic points can be performed more easily from the new stop points.

At step 210, once the last stopping point is processed, the marking means 22 is switched off and the drone 12 returns to the landing point.

At the end of the mission, the piece of land is marked with a plurality of characteristic points allowing the workers to clear the ground so as to produce an excavation intended to receive the swimming pool.

Thus, the system that has just been presented provides for, without contact with the ground, identifying points of interest in the environment and marking them.

A number of variants of the system that has just been described and of its use are possible, notably according to the use case.

To increase the accuracy of the pointing towards the ground, the marking means can be equipped with an anti-vibration device, such as the one used for example in photographic cameras to compensate for the movement of the photographer when taking a shot.

In yet another variant, the drone can be equipped with a mapping means, such as a lidar or Time of Flight (ToF) cameras, to produce a 3D map of the volume within which it moves. This variant is particularly advantageous for using the system inside a building.

In this type of use, the drone can be brought in not only to aid the marking of points on the ground, but also to aid the marking of characteristic points on a projection surface, such as a wall, so that characteristic points can be placed there, forming references to assist a worker in drilling an opening.

In this type of use, in order to calibrate the inertial positioning module, a calibration point is defined by a point between two walls and the floor or the ceiling.

The examples disclosed in this specification are only illustrative of some embodiments of the invention. They do not in any manner limit the scope of said invention which is defined by the appended claims.

## Claims

1. A flying device (12) configured to designate a characteristic point (P) on a surface, said flying device comprising:
- a flight management module (40), configured to execute a flight plan (T) comprising a stop point (O) in line of sight of the characteristic point;
- a position control module (24), configured to control a position of the flying device within a predefined distance of the stop point; and
- a beam generation module (22), configured to generate a beam to create a symbol (S) designating the characteristic point at an intersection of the beam and the surface.

2. The flying device of claim 1, said flying device being a drone with a single propeller.

3. The flying device of claim 1, said flying device being a drone with a plurality of propellers.

4. The flying device of claim 3, said flying device being a drone with at least three propellers.

5. The flying device of one of claims 1 to 4, said flying device being configured to designate a plurality of characteristic points.

6. The flying device of one of claims 1 to 5, wherein the flight plan is defined as a function of forecast air speed.

7. The flying device of one of claims 1 to 6, wherein the flight plan is amended as a function of actual air speed.

8. The flying device of one of claims 1 to 7, wherein the position control module comprises a position sensing module.

9. The flying device of claim 8, wherein the position sensing module comprises a GNSS receiver.

10. The flying device of claim 9, wherein the GNSS receiver delivers a position using atmospheric corrections calculated using un-differenced code and phase measurements of signals received by the GNSS receiver.

11. The flying device of claim 9, wherein the GNSS receiver delivers a position using atmospheric corrections calculated using a combination of code and phase measurements of signals received by a number of other contributing GNSS receivers located in a same geographic area as the GNSS receiver.

12. The flying device of one of claims 8 to 11, wherein the position sensing module comprises an inertial sensor.

13. The flying device of claim 12, wherein the inertial sensor is calibrated in the area of the characteristic points before starting execution of the flight plan.

14. The flying device of one of claims 1 to 13, wherein the beam generation module comprises a laser beam generator.

15. The flying device of claim 14, wherein the laser beam generator is mounted on a gimbal with at least two degrees of freedom.

16. The flying device of one of claims 14 to 15, wherein the laser beam generator generates at least two types of laser beams, a first type of laser beam when the flying device is not stable and a second type of laser beam when the flying device is stable.

17. The flying device of one of claims 14 to 16, wherein the laser beam generator is further configured to print a mark on the surface at the characteristic point.

18. The flying device of one of claims 1 to 17, wherein the beam generation module comprises an aerosol paint projector.

19. The flying device of one of claims 1 to 18, further comprising a camera and an alignment module configured to align a reference feature on the surface with a characteristic point.

20. The flying device of claim 19, wherein the camera and the alignment module are further configured to generate a new characteristic point from a reference feature on the surface.

21. A method of creating in a computer a flight plan for designating a characteristic point on a surface with a flying device, said method comprising:
- Entering the characteristic point in the computer;
- Causing the computer to calculate, for each characteristic point, a first stop point of the flying device, said first stop point being in line of sight of the characteristic point and within a distance of the flying device where a beam generation module on board the flying device will be operable to create a symbol designating the characteristic point at an intersection of the beam and the surface;
- Causing the computer to calculate a flight plan connecting second stop points, each second stop point being equal to or in a vicinity of a first stop point, the second stop points still fulfilling the same constraints as the first stop points, the flight plan being optimal and valid versus a set of predefined criteria;
- Transferring the flight plan to a flight management module of the flying device.

22. A method of designating a characteristic point on a surface with a flying device, said method comprising:
- Executing, on a flight management computer of the flying device, a flight plan comprising a stop point in line of sight of the characteristic point;
- Controlling, with position control hardware and software resources, a position of the flying device within a predefined distance of the stop point; and
- Generating, from a beam generating platform on board the flying device, a beam to create a symbol designating the characteristic point at an intersection of the beam and the surface.
